# EUROPÄISCHE PATENTSCHRIFT

(11) **EP 3 740 324 B1**
(45) Veröffentlichungstag und Bekanntmachung des Hinweises auf die Patenterteilung: **07.06.2023**
(21) Anmeldenummer: 19708928.7
(22) Anmeldetag: 17.01.2019
(51) Int. Cl.: B05B 13/02, B05B 13/06

(54) **GLEITMITTELSPRÜHANLAGE SOWIE GLEITMITTELAUFTRAGSVERFAHREN FÜR DIE INNENFLÄCHENBEHANDLUNG VON EINFÜHRUNGS- UND MONTAGEHILFEN IN EINER PACKSTATION**
LUBRICANT SPRAY SYSTEM AND LUBRICANT APPLICATION METHOD FOR TREATING INNER SURFACES OF INSERTION AND ASSEMBLY AIDS IN A PACKING STATION
SYSTÈME DE PULVÉRISATION DE LUBRIFIANT ET PROCÉDÉ D'APPLICATION DE LUBRIFIANT POUR LE TRAITEMENT DE SURFACES INTÉRIEURES D'AIDES À L'INTRODUCTION ET AU MONTAGE DANS UNE STATION D'EMBALLAGE

(30) Priorität: 17.01.2018 DE 102018000350
(43) Veröffentlichungstag der Anmeldung: 25.11.2020
(73) Patentinhaber: Schmitt Prof. Möhlmann & Collegen Wirtschaftskanzlei - Insolvenzverwalter Aktiengesellschaft, 08056 Zwickau (DE)
(72) Erfinder: SCHMITT, Jens, 08056 Zwickau (DE)
(74) Vertreter: Schneiders & Behrendt Bochum
(86) Internationale Anmeldenummer: PCT/DE2019/000009
(87) Internationale Veröffentlichungsnummer: WO 2019/141306

(56) Entgegenhaltungen:
- WO-A1-97/39970
- WO-A1-2011/020469
- DE-A1-102012 021 784
- JP-A- H0 330 254
- US-A- 4 509 252

## Beschreibung

Die Erfindung betrifft, bezogen auf eine Innenflächen-Behandlung eines als Einführungs- und Montagehilfe ausgebildeten Justier- und Gleitrahmens für Einlageteile in passfähige Hohlkörper mittels einer Gleitmittelsprühanlage in einer Packstation, die Ausbildung dieser Gleitmittelsprühanlage nach dem Oberbegriff des Patentanspruchs 1 sowie ein Gleitmittelauftragungsverfahren nach dem Oberbegriff des Patentanspruchs 6 mit einer jeweils integrierten Aufbereitung und Zusammensetzung eines bereitzustellenden effektiven sprühfähigen Gleitmittels.

Bekannter Stand der Technik ist, Sprühanlagen für einen Oberflächenauftrag bestimmter Werkstoffschichten in Abhängigkeit von der Art, der Struktur, der Dimensionierung sowie des Werkstoffes der zu behandelnden Objekte oder Teile verfahrensspezifisch auszubilden. Aus Gründen der Anlagensicherheit, der Verfahrensrationalität und der Fließ- und Sprühfähigkeit der zu verarbeitenden Stoffe kommen überwiegend Druckluftzerstäubungen als Niederdruckverfahren zur Anwendung.

Trotz unterschiedlicher Oberflächen- Beschichtungen, beispielsweise von
- Farb- sowie Farblackaufträgen,
- Klebschicht- und Abdichtmittelaufträgen und
- Gleitmittelaufträgen
ergeben sich bei den bekannten Sprühanlagen vergleichbare Anlagenstrukturen und Komponentenanordnungen.

Beispielhaft für eine Vielzahl bekannter Sprühanlagen, mit denen industrielle Oberflächenbeschichtungen durch Sprühen auftragbar sind, sind in den nachstehend bekannten Schutzrechten mit innovativen Ausbildungen und Anordnungen von Funktionskomponenten beschrieben.

Inhalt von der EP 3192587 AI ist eine als "Vorrichtung zur Silikonisierung der Innenflächen von Hohlkörpern" bezeichnete industrielle Sprühanlage zum Auftrag dieses als Kleber und Abdichtmittel benutzten Stoffes an den Innenflächen von als Flaschen ausgebildeten Teilen. Diese Anlage besteht aus je einer Wasch-, Sprüh- und Wärmebehandlungsstation, die von den Teilen auf einem Förderband aufliegend, passiert werden.

Bekannte Farbbeschichtungssprühanlagen sind in den Schutzrechtsdokumenten DE 95814, welche eine Sprühstation mit mehreren allseitig schwenkbaren Sprühköpfen zum Spritzen von Behältern, insbesondere Containern, in stationär unveränderter Bearbeitungsstellung und DD 111649, welche eine Sprühanlage, die aus zwei kammerartigen Sprühstationen, welche an einem Förderer für zu glasierende sanitärtechnische Hohlteile angeordnet ist, beschrieben.

Gleitmittelsprühanlagen für flachliegendes Grundlagenmaterial, zum Beispiel flachliegendes tiefgezogenes Substrat, welches auf einem Förderband zu den und an den Sprühköpfen vorbei transportiert wird, ist Gegenstand der EP 2 006 029 A2 und der DE 101 39 633 CI, wobei Sprühköpfe einer Sprühstation beidseitig und einseitig flachliegendes Material mit Gleitmittel besprühen. Ferner ist eine Sprühanlage gemäß Oberbegriff des Anspruchs 1 aus der DE 10 2012 021 784 A1 bekannt.

Nachteil dieser beiden Lösungen ist, dass ein Innenflächenbesprühen an Hohlkörpern mit diesen Sprühanlagenkonstruktionen nicht durchgeführt werden kann.

In der deutschen Patentanmeldung DE 10 2014 005 085 AI "Zellblock für eine elektrische Batterie ... " wird ein Verfahrensablauf für die Anbringung von Halterahmen an jeder Einzelbatteriezelle dargestellt, wobei für deren Montage in den Zellblock der Einsatz einer Fügemaschine und bei hohem Kraftaufwand auch der Einsatz von Fügemitteln zur Verringerung der Reibung zum Einsatz kommt. Die Art des Gleitmittel-Auftrages als Sprühen und eine objektbezogen ausgebildete Sprühanlage werden hier jedoch nicht erwähnt.

Die Wo 2011/020 469 A1 beschreibt eine Anlage zur Bestückung und Ausrüstung von Kfz-Batteriegehäusen.

Die Nachteile dieser als Stand der Technik bekannten Beispiellösungen von Sprühanlagen, die auch zum Gleitmittelauftrag Verwendung finden können, sind das Vorhandensein von nur einer oder zwei ausschließlich für den Sprühmittelauftrag angeordneten Sprühstationen mit Sprühköpfen, die ausschließliche Bewegung des zu besprühendem Flachmaterials, wie Bleche und Hohlteile mittels Förderbändern, die fehlende anlagen- und verfahrensbedingte kostensenkende Kombination von gesprühten Gleitmittelauftrag und einer orts- und zeitnahen Nutzung der Gleitmittelschicht,
- ein fehlender Kreislauf von Aufbereitung, Zuleitungen und Sprühen des
   Gleitmittels sowie der Aufnahme und Rückführung von der
   Gleitmittelrestmengen,
- die Anordnung und Ausbildung von Sicherheitsmaßnahmen für den Einsatz von flüchtigen Gleitmitteln,
   sowie
- die Ausbildung einer kleinräumig und in einer Verarbeitungsanlage integriert einordenbar ausgebildeten Gleitmittelsprühanlage.

Auch zum Stand der Technik gehört das manuelle Einsprühen der Justier- und Gleitrahmen für das Einboxen der fertig bearbeiteten Batterieplattenpakete in die bereitgestellten leeren Batteriekästen durch Öffnen der Sicherungsvorrichtung von einem Teil der Anlage und dem eventuell notwenigen Entfernen von beim Einboxen abgestreiften Materialrückständen des Gleitmittels an den Rändern des Justier- und Gleitrahmens und dem anschließenden manuellen Einsprühen dieser mit einem Gleitmittel, welches in Sprühflaschen bereitgestellt wird. Da dieser Vorgang immer das Eingreifen in die Fertigungsanlage und den Fertigungsprozess erfordert, wird dies nur selten und nicht nach Bedarfsfall durchgeführt. Dadurch werden die Justier- und Gleitrahmen nur in größeren zeitlichen Abständen besprüht, was wiederum zu einem Qualitätsverlust an den Anlageteilen beim Einboxen durch die damit verbundene höhere mechanische Belastung der Anlageteile führt. Weiterhin führt der Einsatz von Sprühflaschen zu einem enormen Verpackungsmüll, welche kostenaufwendig entsorgt und einer kostenintensiven Wiederaufbereitung zugeführt werden muss.

Es ist deshalb Aufgabe der Erfindung, eine konstruktive und verfahrenstechnische Lösung zu schaffen, mit deren Hilfe die bekannten Nachteile des Standes der Technik überwunden werden können. Die Problemstellung ist, die Anlagenstruktur und die Komponentenausstattung von Sprühanlagen für den Einsatz von Gleitmitteln so innovativ zu bestimmen, dass das Auftragsverfahren und das Nutzungsverfahren eines Gleitmittels kombiniert in einer innovativen kleinräumig gestalteten Anlage durchführbar sind. Weiterhin ist es notwendig, dass die zu gestaltende Anlage und das erfinderische Verfahren eine Aufbereitungsanlage für das Gleitmittel selbst und eine Sicherheitsvorrichtung für den sicheren Einsatz des eingesetzten Gleitmittels aufweist.

Die DE 10 2012 021 784 A1 beschreibt eine Sprühanlage gemäß dem Oberbegriff des Anspruchs 1. Aus der WO 2011/020 469 A1 ist eine Anlage zur Bestückung und Ausrüstung von Kfz-Batteriegehäusen bekannt. Insbesondere sieht der Stand der Technik keine Absaugung zur Erzeugung eines Unterdrucks vor.

Erfindungsgemäß wird die Aufgabe zur Ausbildung und zur Struktur einer Gleitmittelsprühanlage für die Innenflächenbehandlung von Einführungs-und Montagehilfen in einer Packstation durch die Merkmale des Patentanspruchs 1 und die Problemstellung der Verfahrensmerkmale für die Bereitstellung und den Einsatz des dafür geeigneten Gleitmittels sowie die erforderlichen Sicherheitsmaßnahmen durch die Merkmale des Patentanspruchs 6 gelöst, wobei die jeweils vorteilhaften Ausbildungen in den dazugehörigen Unteransprüchen beschrieben sind.

Danach besteht eine Gleitmittelsprühanlage zur Innenflächenbehandlung eines Justier- und Gleitrahmens, der als Einführwigs- und Montagehilfe für Batterieplattenpakete in dafür vorgesehene passfähige Batteriebehälter zur Anwendung kommt, zunächst aus einer ersten Sprühstation, einer Montagestation und einer zweiten Sprühstation, die nebeneinander angeordnet sind und zwischen diesen hin- und herwechselnd ein Justier- und Gleitrahmen, der den Charakter einer Ausricht- und Justiervorrichtung hat, horizontalgerichtet bewegbar, angeordnet ist.

Erfindungsgemäß sind in der Gleitmittelsprühanlage mehrere horizontale Funktionsebenen ausgebildet. In einer oberen Zuführebene, sind über eine Zuführstrecke positionierte, sortierte und jeweils mit einer Klemmplattenvorrichtung fixierte Batterieplattenpakete mit einem Linearantrieb in eine Mittelstellung der Montagestation bewegbar.

In einer oberen Arbeitsebene sind die Sprühköpfe sowie die Absaugung in der Sprühstation 1 und in der Sprühstation 2 angeordnet.

In einer mittleren Arbeitsebene sind mindestens zwei als Einzelrahmen oder ein als Doppelrahmen mit viereckigen Innenöffnungen ausgebildete Justier- und Gleitrahmen in koordinierten Taktzeiten zwischen den Sprühstationen und der Montagestation hin und her linear gerichtet sowie längsbeweglich angeordnet.

In einer unteren Arbeitsebene sind mit einem absenkbar beweglichen Einschubstempel stirnseitig über dem Batterieplattenpaket anliegend, dessen absenkende Einschub- und Gleitbewegung durch einen Justier- und Gleitrahmen hindurch und fortgesetzt bewegt als eine gleitende Einführung und ein Absetzten des Batterieplattenpakets in den Batteriebehälter realisierbar.

Nach Öffnen und Herausheben der Klemmplattenvorrichtung erfolgt eine Freigabe der Innenflächen des Justier- und Gleitrahmens und dessen Wegbewegen aus der Montagestation hin zur Sprühstation 1 oder zur Sprühstation 2, wobei die montierten Batterien in einer unteren Arbeitsebene aus der Gleitmittelsprühanlage heraus- und wegbewegbar sind. Über diese Funktionsebenenanordnung ist eine zeitlich koordinierte sowie steuerbare Anlagennutzung in allen Funktionsebenen durchführbar.

Ergänzende Merkmale zur Ausbildung einer Gleitmittelsprühanlage sind in den Patentansprüchen 2 und 3 benannt. Sie betreffen die Ausbildung der Funktionskomponenten mit denn der Gleitmittelauftrag vorbereitet und durchgeführt wird sowie die Anordnung des Justier- und Gleitrahmens.

Ein wesentliches Merkmal der Gleitmittelsprühanlage ist der Einsatz eines Gleitmittelbehälters mit einem Rührwerk. Dazu ist im näheren Bereich der Sprühstationen ein druckloser Gleitmittel-Vorratsbehälter fest installiert angeordnet und mit einer Ringleitung, welche für die Zu- und Ableitung des Gleitmittels zuständig ist, verbunden. Dadurch besteht der Vorteil, dass ein Absetzen des Gleitmittels in der Leitung verhindert und das überschüssige Gleitmittel aufgefangen und dem Vorratsbehälter zurückgeführt werden kann.

In der Ringleitung selbst ist eine Förderpumpe für den Transport des Gleitmittels angeordnet. In Verbindung mit dem in der Ringleitung angeordneten Materialflussregler kann der Materialfluss des Gleitmittels in Menge und Druck konkret auf den jeweiligen Bedarf abgestimmt, reguliert werden und kann darauf verzichtet werden, dass der Materialvorratsbehälter druckbelastet werden muss. Der Materialflussregler ist innerhalb der Ringleitung und dabei der Gleitmittelpumpe nachgeschaltet und dem Sprühkopf vorgeschaltet, in wenigstens einer Sprühstation angeordnet. Der Sprühkopf selbst ist zur lagegenauen Positionierung an den erforderlichen Sprühpositionen stationär auf einer stufenlos linear den Sprühkopf transportierenden und mit einem Servomotor angetriebenen Servoachse angeordnet.

Der Sprühkopf ist dabei pneumatisch angesteuert und mit der Ringleitung fest verbunden. Vorteilhafterweise ist der Sprühkopf dreh- und schwenkbar gelagert ist, um alle erforderlichen Bereiche des Einboxrahmens mit Gleitmittel in der jeweiligen Position des Sprühkopfes zu beschichten. Es besteht auch die Möglichkeit, den Sprühkopf über einen Roboterarm an die jeweilige Sprühposition zu positionieren. Diese Variantenauswahl ist jeweils abhängig von vorhandenen Platzbedarf der Anlagenkonstruktion und vom Kundenwunsch.

Zum Ausschluss von Explosionsgefahren ist der gesamte Bereich der Sprühstationen mittels einer in diesen Bereichen angeordneten Absaugung in einem lufttechnisch betrachteten Unterdruckbereich gehalten.

Der Verfahrensablauf ist durch die ohne zeitliche Unterbrechungen durchführbaren unmittelbar aufeinanderfolgenden Verfahrensschritte
- Gleitmitteleinsprühung und
- Horizontale Stationswechselbewegung eines Justier- und Gleitrahmens zwischen den Sprühstationen 1 und 2 sowie der Montagestation, fortgesetzt durch
- absenkendes Einführen und Montieren eines Batterieplattenpaketes sowie
- Zu- und Abführbewegungen und
- sensorisch überwachte Steuerungen von Verfahrenseinstellungen während des gesamten Verfahrensablaufes gekennzeichnet.

Das Gleitmittel, welches zur Innenflächenbehandlung an den Justier- und Gleitrahmen zur Anwendung kommt, besteht erfindungsgemäß aus einem Gemisch aus Polytetrafluorethylen, was auch unter der Abkürzung PTFE und unter dem Handelsnamen Teflon bekannt ist, und Isopropanol. Isopropanol wird dabei als Trägerstoff eingesetzt. Diese Stoffzusammensetzung sichert eine fließfähige und sprühfähige Gleitmittelverwendung des Gleitmittels Polytetrafluorethylen in der Gleitmittelsprühanlage.

Polytetrafluorethylen wird durch den zugemischten Trägerstoff fließfähig gehalten und im Gleitmittelbehälter mittels Rührwerk ständig homogenisiert, über eine Gleitmittelringleitung zu den Sprühköpfen in den Sprühstationen zugeleitet und mittels der Sprühköpfe als Sprühnebel auf die Innenflächen der Justier- und Gleitrahmen haftenbleibend aufgetragen.

Um eine Überwachung für den notwendigen Einsatz des Gleitmittels realisieren zu können, sind an dem Einschubstempel Druckmessdosen zur Überwachung des Einschubdrucks, welcher für das Einboxen der Batterieplattenpakte durch die Justier- und Gleitrahmen hindurch in die bereitgestellten Batteriebehälter erforderlich sind, angeordnet. Überschreitet dieser notwendige Druck einen vorgegebenen Wert, erfolgt eine Informationsweitergabe an die Steuerung der Gleitmittelsprühanlage. Der Materialdruck wird dabei einmalig am Anfang eingestellt und ist für die Einstellung des Sprühgemisches notwendig. Beim Überschreiten des Grenzwertes an den Druckdosen wird lediglich der Befehl Rahmenwechsel ausgelöst und der zweite zuvor mit Gleitmittel präparierte Gleit- und Justierrahmen eingeschoben.

Zur Absicherung eines reibungslosen Verfahrensablaufes wird der gesamte Bereich des Gleitmittel-Einsprühens mittels einer in diesem Bereich installierten Absaugvorrichtung mit einem dadurch im Rohr eingestellten unterdruckluftdruckseitig voreingestellten Unterdruck abgesaugt. Dies soll verhindern, dass der entstehende Sprühnebel sich in der Anlage verteilt und entzünden kann.

Die Erfindung ist an einem Ausführungsbeispiel vereinfacht dargestellt.

In den beigefügten Figuren zeigt:
Fig. 1: eine schematische Vorderansicht der Gleitmittelsprühanlage in einer vereinfachten Strukturgarstellung und
Fig. 2: eine schematische Draufsicht nach Fig. 1, ausgehend von der mittleren Arbeitsebene,
Fig. 3: eine schematische Darstellung der Vorrichtungskomponenten als Frontansicht,
Fig. 4: eine schematische Darstellung eines Sprühbereiches als Draufsicht,
Fig. 5: eine Darstellung der Förderpumpe,
Fig. 6: eine Darstellung eines Sprühbereiches als isometrische Ansicht und

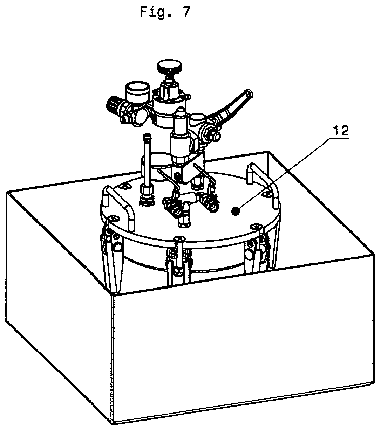

Fig. 7: eine Darstellung des Gleitmittelbehälters mit Rührwerk.

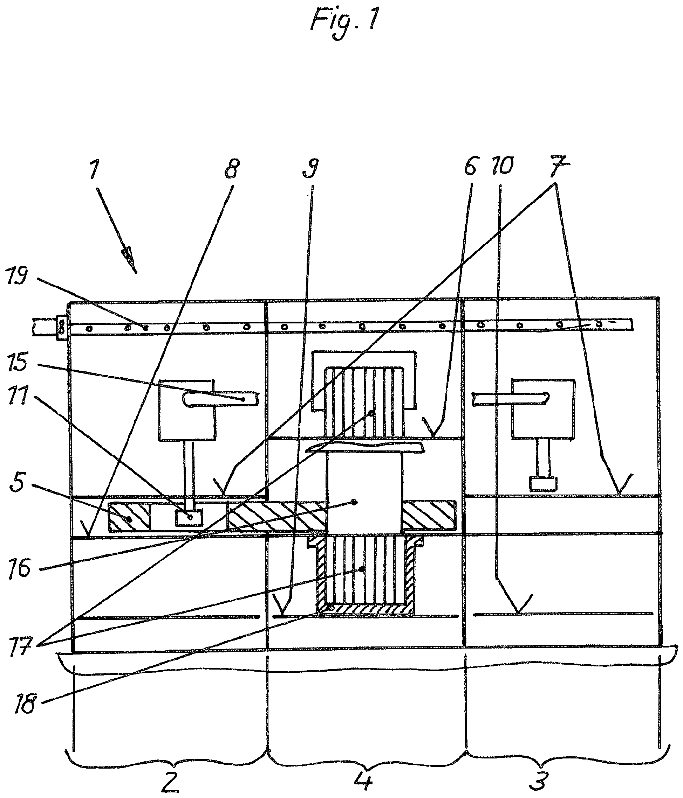

Die in Figur 1 schematisch dargestellte Gleitmittelsprühanlage zeigt die nebeneinander angeordneten funktionswesentlichen Anlageteile
- Sprühstation 1 (2),
- Montagestation 4 und
- Sprühstation 2 (3),
mit den in diesen angeordneten Funktionskomponenten, wie die Absaugung 19, zur Erzielung eines Unterdrucks im Gehäuse und die über die Ringleitung 15 stoffverbundenen Sprühköpfe 11 in den Sprühstationen 1 und 2 und den Einschubstempel 16 in der Montagestation 4. Neben dieser Darstellung einer grundsätzlichen Anlagenstruktur erfolgt eine Darstellung der funktionellen Verfahrensstruktur über die horizontal durch die Gleitmittelsprühanlage 1 verlaufenden visuelle dargestellten Funktionsebenen, als
- die obere Zuführebene 6 für die Zuführung der Batterieplattenpakete 17 und darunter angeordnet, die obere Arbeitsebene 7, in der die Gleitmittelzuleitung und der Gleitmittelauftrag über die Sprühköpfe 11 sowie die Absaugung zur Erzeugung eines leichten Luftunterdrucks erfolgt und im beweglichen Oberteil der Montagestation 4 der Einschubstempel 16 mit Druckmessdosen angeordnet ist;
- die mittlere Arbeitsebene 8 in der die Stationswechselbewegung des Justier- und Gleitrahmens 5 stattfindet;
- die untere Arbeitsebene 9, in der im Ergebnis der absenkenden Hubbewegung des Einschubstempels 16 ein stirnseitig anliegend, jeweils sortiertes, fertig bearbeitetes und geklemmtes Batterieplattenpaket 17 durch die untere Öffnung im Justier- und Gleitrahmen 5 hindurch absenkend in den passend darunter positionierten Batteriebehälter 18 hineingleitend eingeschoben ist und die untere Arbeitsebene 10 in der die fertig montierte Batterie von der Montagestation 4 aus der Gleitmittelsprühanlage 1 heraus abgeführt bewegt wird.

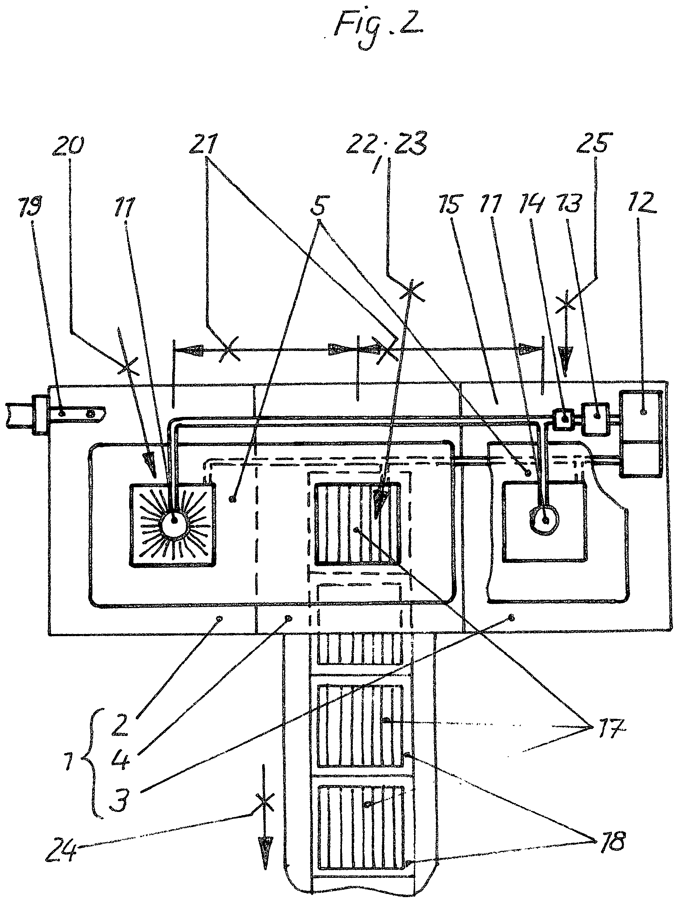

Die in Figur 2 als Sicht auf die mittlere Arbeitsebene dargestellte Gleitmittelsprühanlage zeigt neben den konstruktiven sichtbaren Vorrichtungsmerkmalen mit Richtungspfeilen die realisierbaren Verfahrensschritte und ihren Wirksamkeitsort in den Anlagenteilen und an den Funktionskomponenten an.
- Verfahrensschritt: Gleitmitteleinsprühung 20 abwechselnden in den Sprühstationen 1 und 2
- Verfahrensschritt: Stationswechselbewegung 21 bezogen auf den Justier- und Gleitrahmen 5 zwischen einer der Sprühstationen 1 und 2 und der Montagestation 4, Verfahrensschritt: Einschub und Gleitbewegung 22 in der Montagestation 4
   - Verfahrensschritt: Einführen und Montieren 23 in der Montagestation 4 sowie
   - Verfahrensschritt: Zuführ- und Abführbewegungen 24 in die und aus der Montagestation 4.

Daneben läuft der Verfahrensschritt Verfahrensablaufsteuerung 25 ab, welcher in der Figur 2 am Beispiel der Gleitmittelflussreglung in der Ringleitung 15, die mittels eines Materialflussreglers 14 erfolgt, dargestellt ist.

Weiterhin wird in Figur 2 der Justier- und Gleitrahmen 5 in einer Ausbildung als Doppelrahmen mit zwei nebeneinander angeordneten Innenöffnungen zum gleitenden Ein- und Durchschieben jeweils eines Batterieplattenpaketes 17 und dessen Einführen sowie Montieren in einen passend darunter positionierten Batteriebehälter 18 gezeigt.

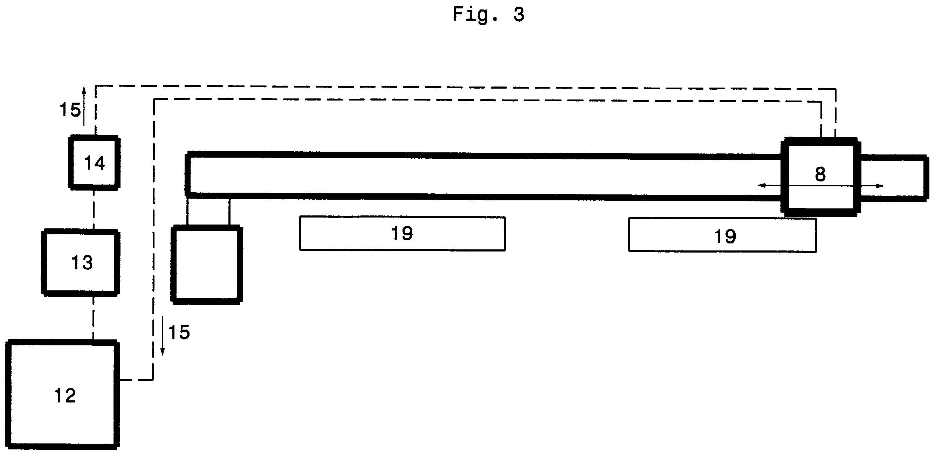

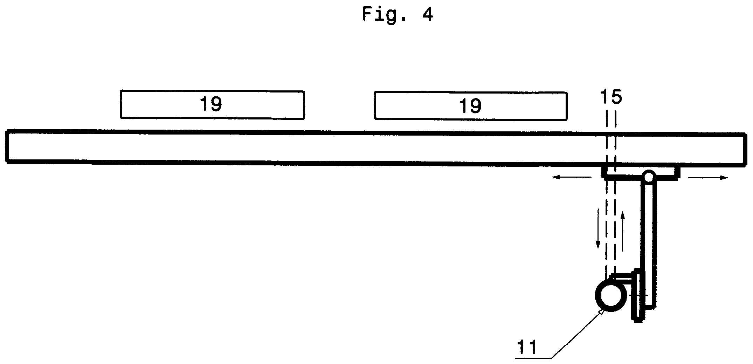

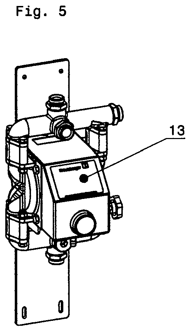

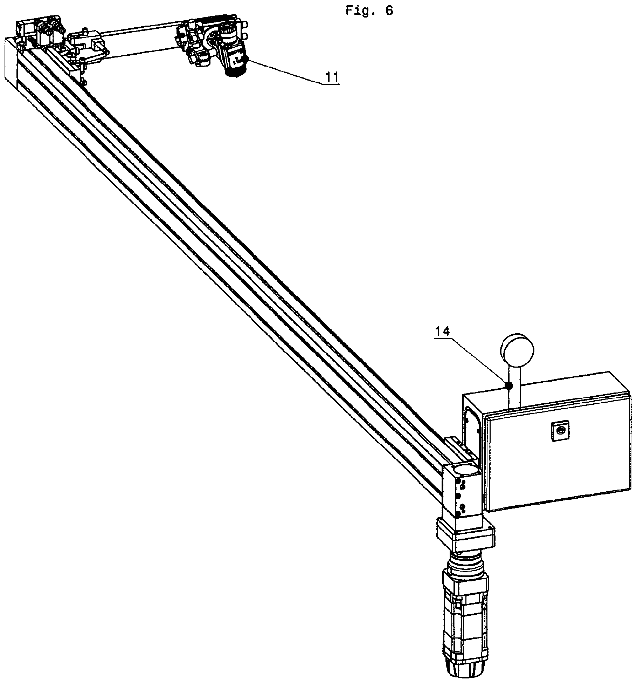

In den Figuren 4 bis 6 werden der Sprühbereich als Draufsicht, die Förderpumpe für den Transport des Gleitmittels, und der Gleitmittelbehälter mit Rührwerk als die für die Zuführung der Stoffmischung erforderlichen Vorrichtungsanordnungen gezeigt. Das Verwenden des flüssigen Gleitmittels sowie die Ableitung und Zurückführung von abgelaufenen und abgetragenen Gleitmittelresten erfolgt über die Ringleitung 15, wie in Fig. 1 bis 4 schematisch dargestellt, wobei der Gleitmittelbehälter 12 mit Rührwerk, die Förderpumpe 13, der Materialfluss- und Druckregler 14 und die Sprühköpfe 11 miteinander leitungsverbunden sind.

Nicht dargestellt in den Figuren sind die Bewegungsantriebe, die sensorischen Steuerungskomponenten und die Anlagen- und Funktionssicherheitselemente der Gleitmittelsprühanlage 1.

Neben der Batterieelemente-Montage sind auch andere mit Gleitmittelnutzung durchzuführenden Hohlkörperausrüstungen durchführbar.

Die erfindungsgemäße Vorrichtung sowie das mit dieser durchführbare Verfahren zur Innenflächenbehandlung von Justier- und Gleitrahmen, welche in diesem Einsatzfall als Einfiihrungs- und Montagehilfe für Batterieplattenpakete in passfähige Batteriebehälter zur Anwendung kommen, besteht darin, dass mit Hilfe von Einfiihrhilfen, automatisch und reguliert zugeführten sowie effizient wirkendem flüssigen Gleitmittel bei gleichzeitigem dosiertem Absaugen von überflüssigen Sprühnebel zur Vermeidung einer Explosionsgefahr ein ungestörter Verfahrensablauf des Einboxens von fertig bearbeiteten Batterieplattenpakten in dafür bereitgestellte Batteriekästen erfolgen kann. Dazu ist es von Vorteil, dass das Einsprühen der Innenflächen der Gleit- und Justierrahmen wechselseitig durch eine Spritzdüse; die entweder oberhalb der zu benetzenden Innenflächen der Gleit- und Justierrahmen als stationär positionierter sowie schwenkbeweglich angeordneter und das Gleitmittel versprühender Sprühkopf oder durch einen außerhalb der Sprühstationen angeordneter und in die jeweilige Sprühstation hinein schwenkbarer Schwenkarm mit stirnseitig angeordnetem Sprühkopf erfolgt.

Es werden dadurch die erfinderische technische Lösung die Nachteile des Standes der Technik ebenso sicher vermieden wie es vermieden wird, dass Verpackungsmüll von in Kleinverpackungen aufbewahrtes Gleitmittel in großen Mengen anfällt, welcher ansonsten unter großen Aufwand entsorgt und wiederaufbereitet werden muss, und es wird eine speziell ermittelte notwendige Einsatzmenge des Gleitmittels mittels eines Materialflussreglers zum Einsatz gebracht, was ein Zuviel des Einsatzes an Gleitmittel verhindert.

### Bezugszeichenliste

Für die Anlagenkomponenten:
- 1: Gleitmittelsprühanlage
- 2: Sprühstation 1
- 3: Sprühstation 2
- 4: Montagestation
- 5: Justier- und Gleitrahmen
- 6: Obere Zufilhrebene
- 7: Obere Arbeitsebene
- 8: Mittlere Arbeitsebene
- 9: Untere Arbeitsebene
- 10: Untere Ableitungsebene
- 11: Sprühköpfe
- 12: Gleitmittelbehälter mit Rührwerk
- 13: Förderpumpe für Gleitmittel
- 14: Materialfluss- und druckregler
- 15: Ringleitung
- 16: Einschubstempel mit Druckmessdosen
- 17: Batterieplattenpaket
- 18: Batteriebehälter
- 19: Absaugung

Für die Verfahrensschritte:
- 20: Gleitmitteleinsprühung
- 21: Stationswechselbewegung
- 22: Einschub- und Gleitbewegung

## Patentansprüche

1. Gleitmittelsprühanlage (1) für die Innenflächenbehandlung von Einführ-und Montagehilfen mit durchgehenden Öffnungen, für das Einboxen von Batterieplattenpaketen (17) in passfähige Batteriebehälter (18) in einer Einboxstation, **dadurch gekennzeichnet, dass** die Gleitmittelsprühanlage (1) mit einer Absaugung (19) ausgestattet ist, aus einer Sprühstation 1 (2), einer Sprühstation 2 (3) und einer zwischen diesen angeordneten Montagestation (4) besteht, zwischen denen hin- und herwechselnd ein als Hohlkörper ausgebildeter Justier-und Gleitrahmen (5) horizontal gerichtet bewegbar angeordnet ist, wobei die Sprühstationen (2, 3) mit je mindestens einem stationär positionierten sowie schwenkbeweglich angeordneten und das Gleitmittel versprühenden Sprühkopf (11) ausgestattet sind und an der Montagestation (4) mindestens ein vertikal gerichtet hubbeweglicher Einschubstempel (16) am beweglichen Oberteil der Montagestation (4) angeordnet ist, der mit Druckmessdosen ausgestattet ist, und dass in der Gleitmittelsprühanlage (1) mehrere horizontale Funktionsebenen sind, wobei in
- einer oberen Zuführebene (6) über eine Zuführstrecke positionierte und sortierte Klemmbackenvorrichtungen zur Fixierung von Batterieplattenpaketen (17) mit einem Linearantrieb in eine Mittelstellung in der Montagestation (4) bewegbar sind,
- einer oberen Arbeitsebene (7) die Sprühköpfe (11) in der Sprühstation 1 (2) und in der Sprühstation 2 (3) angeordnet sind,
- einer mittleren Arbeitsebene (8) mindestens zwei als Einzelrahmen oder ein als Doppelrahmen mit jeweils viereckigen Innenöffnungen ausgebildete Justier- Gleitrahmen (5) in koordinierten Taktzeiten zwischen den Sprühstationen (2, 3) und der Montagestation (4) hin und her linear gerichtet sowie längsbeweglich angeordnet sind, wobei in
- einer unteren Arbeitsebene (9) der abgesenkte Einschubstempel (16), welcher stirnseitig über die Klemmbackenvorrichtung an den davon fixierten Batterieplattenpaketen (17) anliegt und bei dessen absenkender Einschub-und Gleitbewegung durch den in der mittleren Arbeitsebene (8) angeordneten Justier- und Gleitrahmen (5) hindurch in die in der unteren Arbeitsebene (9) zugeführt angeordneten leeren Batteriebehälter (18) zeitweise positioniert und nach dem Einboxen der Batterieplattenpakete (17) in die Batteriebehälter (18) aus dieser Position in die mittlere Arbeitsebene zurück positionierbar angeordnet ist.

2. Gleitmittesprühanlage (1) nach dem Patentanspruch 1, **dadurch gekennzeichnet, dass** die in der Sprühstation 1 (2) und in der Sprühstation 2 (3) stationär positionierbarer schwenkbeweglich angeordnete Sprühköpfe (11) über eine Ringleitung (15) für die Zuführung und die Ableitung des verflüssigten Gleitmittels mittels Druckluft mit einem Gleitmittelbehälter (12), einer Förderpumpe (13) und einem Materialfluss- und druckregler (14) für das Gleitmittel leitungsverbunden angeordnet sind, wobei der Gleitmittelbehälter zur Homogenisierung des bereitgestellten flüssigen Gleitmittels mit einem Rührwerk ausgestatteten ist und dass mittels der Absaugung (19) im Gehäuse der Gleitmittelsprühanlage (1) ein permanenter Unterdruck realisiert ist.

3. Gleitmittelsprühanlage (1) nach den Patentansprüchen 1 und 2, **dadurch gekennzeichnet, dass** ein horizontal zwischen der Sprühstation 1 (2) und der Montagestation (4) sowie zwischen der Sprühstation 2 (3) und der Montagestation (4) wechselseitig gerichtet bewegbarer Justier- und Gleitrahmen (5) als Doppelrahmen mit mindestens zwei benachbart angeordneten viereckigen Innenöffnungen der Art der Dimensionierung des durchgeschobenen und durchgeleitenden Batterieplattenpaketes (17) angepasst, ausgebildet ist.

4. Gleitmittelsprühanlage (1) nach einem der Patentansprüche 1 bis 3, **dadurch gekennzeichnet, dass** der oder die Einschubstempel (16) mit Druckmessdosen ausgestattet sind.

5. Gleitmittelsprühanlage (1) nach einem der Patentansprüche 1 bis 4, **dadurch gekennzeichnet, dass** außerhalb der Sprühstationen (2, 3) mindestens ein in die Sprühstationen (2.3) einschwenkbarer Schwenkarm mit stirnseitig angeordnetem Sprühkopf (11) angeordnet ist

6. Verfahren zur Innenflächenbehandlung an einem Justier- und Gleitrahmen (5), der als Einführungs- und Montagehilfe für Batterieplattenpakete (17) in passfähige Batteriebehälter (18) dient, mit einer Gleitmittelsprühanlage (1) nach einem der Patentansprüche 1 bis 5, **dadurch gekennzeichnet, dass** einem Verfahrensschritt
- Gleitmitteleinsprühung (20) an den Innenflächen eines Justier- und Gleitrahmens (5) in den Sprühstationen 1 und 2 (2, 3) die Verfahrensschritte;
- horizontale Stationswechselbewegung (21) des Justier- und Gleitrahmens (5) von einer der Sprühstationen 1 und 2 (2, 3) zur Montagestation (4) hin und zurück;
- absenkende Einschub- und Gleitbewegung je eines Batterieplattenpaketes (17) durch den Justier- und Gleitrahmen (5) hindurch und anschließend
- ein absenkendes und gleitendes Einführen und Montieren (23) dieses Batterieplattenpaketes (17) in je einen passfähig positionierten Batteriebehälter (14) sowie ohne Zeitunterbrechung unmittelbar folgend in koordinierter Folge als Verfahrensschritte;
- die Zu- und Abführbewegungen (24) von Batterieplattenpaketen (17) und Batteriebehältern (18) zur Montagestation (4) hin und montiert von dieser wegführend sowie
- sensorisch festgestellte Verfahrensablaufsteuerungen (25) und Verfahrensänderungen automatisiert ablaufend, realisiert werden, wobei während des gesamten Verfahrensablaufes der Umgebungsluftbereich des Gleitmitteleinsprühens (20) mittels einer der Verfahrenssicherheit dienenden Absaugung (19) der Luft luftdruckseitig im Unterdruckbereich gehalten wird.

7. Verfahren nach dem Anspruch 6, **dadurch gekennzeichnet, dass** als Gleitmittel ein Stoffgemisch aus Polytetrafluorethylen und aus Isopropanol homogenisiert und im flüssigen Zustand zum Einsatz kommt, wobei das Polytetrafluorethylen durch das zugemischte Isopropanol fließfähig und drucklos von einem Gleitmittelbehälter (12) mit Rührwerk über eine Gleitmittelringleitung (15), den Sprühköpfen (11) zugeleitet und über die Sprühköpfe (11) als Sprühnebel auf die Innenflächen der Justier-und Gleitrahmen (5) haftenbleibend aufgetragen wird.

8. Verfahren nach den Ansprüchen 6 und 7, **dadurch gekennzeichnet, dass** die sensorisch festgestellte Verfahrensablaufsteuerung zum Feststellen des notwenigen Gleitmitteleinsatzes und damit zur horizontalen Stationswechselbewegung (21) der Justier- und Gleitrahmen (5) mittels am Einschubstempel (16) angeordneten und zur Messung und Überwachung eines vorgegebenen Einschubdrucks dienenden Druckmessdosen informationsseitig und verfahrensregulierend durchgeführt wird.

9. Verfahren nach den Ansprüchen 6 und 7, **dadurch gekennzeichnet, dass** die sensorisch festgestellte Verfahrensablaufsteuerung zum Feststellen des notwenigen Gleitmitteleinsatzes und damit zu horizontalen Stationswechselbewegung (21) der Justier- und Gleitrahmen (5) mittels vorgegebenen Intervall verfahrensregulierend durchgeführt wird.

## Claims

1. Lubricant spraying system 1 for treatment of the inner surfaces of insertion and assembly aids with through-openings, for the inboxing of battery plate packs (17) into suitably sized battery containers (18) in a boxing station, **characterized in that**
the lubricant spraying system (1) is equipped with an exhaust system (19) and consists of a spray station 1 (2), a spray station 2 (3), a mounting station (4) arranged between these, between which an adjusting and sliding frame (5) constructed as a hollow body is arranged so as to be movable in a horizontally directed manner, wherein the spray stations (2, 3) each being equipped with at least one stationarily positioned and pivotably arranged spray head (11) for lubricant spraying, and at least one vertically directed infeed rod (16) equipped with load cells and capable of vertical lifting movement being arranged on the movable upper part of the mounting station (4), and that there is a plurality of horizontal functional levels in the lubricant spraying system (1), wherein
- on an upper feed level (6) over a feed section, battery plate packs (17) positioned, sorted and each fixed by a clamping jaw device can be moved by a linear drive into a middle position in the mounting station (4),
- on an upper working level (7) the spray heads (11) are arranged in the spray station 1 (2) and in the spray station 2 (3),
- on a middle working level (8), adjusting and sliding frames (5) are arranged, designed in the form of at least two single frames or one double frame each with square inner openings each, longitudinally movable to and fro in coordinated cycle times between the spraying stations (2, 3) and the mounting station (4) in a linear direction, and wherein
- on a lower working level (9) the lowered infeed rod (16) is arranged, which abuts via the clamping jaw device on the end faces of the battery plate packs (13) fixed thereby and, during the lowering insertion and sliding movement of which, passing through the adjusting and sliding frame (5) arranged on the middle working level (8), is temporarily positioned into the empty battery containers (18) transferred to and arranged on the lower working level (9) and, after the battery plate packs (17) have been boxed into the battery containers (18), can be moved back from this position to the middle working level.

2. Lubricant spraying system (1) according to claim 1, **characterized in that** the spray heads (11), which can be positioned so as to be stationary in the spray station 1 (2) and in the spray station 2 (3) in a pivotally movable manner, are arranged in a line-connected configuration via a ring main (15) for the supply and discharge of the liquid lubricant by means of compressed air via a lubricant tank (12), a feed pump (13) and a material flow and pressure regulator (14) for the lubricant, with the lubricant tank being equipped with an agitator for homogenizing the liquid lubricant provided, and **wherein**
a permanent negative pressure is produced by means of an exhaust system (19) in the housing of the lubricant spraying system (1).

3. Lubricant spraying system (1) according to claims 1 and 2, **characterized in that** an adjusting and sliding frame (5) is provided between the spray station 1 (2) and the mounting station (4) as well as between the spray station 2 (3) and the mounting station (4), said frame being horizontally movable in alternate directions and designed as a double frame with at least two adjacently arranged square inner openings, said frame being suitably adapted to the type of dimensioning of the battery plate pack (17) pushed and sliding through.

4. Lubricant spraying system (1) according to any one of the claims 1 to 3, **characterized in that** said system is provided with an infeed rod (16) equipped with load cells.

5. Lubricant spraying system (1) according to any one of claims 1 to 4, **characterized in that** external to the spray stations (2, 3) there is arranged at least one swivel arm which can be swiveled into the spray stations (2, 3) and has a spray head (11) arranged on the front side.

6. Method related to and being applied with a lubricant spraying system (1) for the treatment of inner surfaces of an adjusting and sliding frame (5) which serves as an insertion and mounting aid for battery plate packs (17) into suitably sized battery containers (18) according to claims 1 to 5, **characterized in that** the process steps
Lubricant spraying (20) on the inner surfaces of an adjusting and sliding frame (5) in spray stations 1 and 2 (2, 3), in followed by
horizontal change-station movement (21) of the adjusting and sliding frame (5) from one of the spray stations 1 and 2 (2, 3) to the mounting station (4) and back;
lowering infeed and sliding movement of one battery plate pack (17) each passing through the adjusting and sliding frame (5) and subsequently
lowering and sliding insertion and mounting (23) of this battery plate pack (17) into a suitably sized and positioned battery container (18),
and immediately following this without time interruption in a coordinated sequence as process steps;
the feeding and discharge movements (24) of battery plate packs (17) and battery containers (18) towards the mounting station (4) and, with the packs being assembled, away from said station, as well as
sensor-monitored process flow controls (25) and process changes being implemented in an automated manner, wherein during the entire process sequence the ambient air area of the lubricant spraying activity (20) being kept under negative pressure on the air pressure side by means of an exhaust system (19) thus meeting process safety requirements.

7. Method according to claim 6, **characterized in that** a mixture of polytetrafluoroethylene and isopropanol is used as the lubricant, which is homogenized and used in liquid state, wherein the polytetrafluoroethylene due to the admixed isopropanol is rendered flowable and transferred pressureless from a lubricant tank (12) with agitator via a lubricant ring main (15) to the spray heads (11) and is applied via the spray heads (11) in the form of an adhering spray mist to the inner surfaces of the adjusting and sliding frames (5).

8. Method according to claims 6 and 7, **characterized in that** the sensor-detected process flow control for determining the necessary amount of lubricant to be used and thus for the horizontal change-station movement (21) of the adjusting and sliding frame (5) is carried out in an information-related and process-regulating way by means of pressure load cells arranged on the infeed rod (16) and serving to measure and monitor a predetermined insertion pressure.

9. Method according to claims 6 and 7, **characterized in that** the sensor-detected process flow control for the determination of the amount of lubricant required and thus for the horizontal change-station movement (21) of the adjusting and sliding frames (5) is carried out in a process regulating manner by means of a prescribed/preset interval.

## Revendications

1. Installation de pulvérisation de lubrifiant (1) pour le traitement de surfaces intérieures d'auxiliaires à l'introduction et au montage avec des ouvertures continues, pour le conditionnement d'empilements de plaques de batterie (17) dans des contenants de batterie (18) adaptables dans une station de conditionnement, **caractérisée en ce que** l'installation de pulvérisation de lubrifiant (1) est équipée d'une évacuation par aspiration (19), est constituée d'une station de pulvérisation 1 (2), d'une station de pulvérisation 2 (3) et d'une station de montage (4) disposée entre celles-ci, entre lesquelles une armature d'ajustement et de glissement (5) réalisée en tant qu'un corps creux est disposée de manière à pouvoir être déplacée en étant dirigée horizontalement en alternance en va-et-vient, dans laquelle les stations de pulvérisation (2, 3) sont équipées respectivement d'au moins une tête de pulvérisation (11) positionnée de manière stationnaire et disposée de manière mobile par pivotement et pulvérisant le lubrifiant et au moins une matrice d'insertion (16) pouvant effectuer un mouvement alternatif de manière dirigée verticalement est disposée sur la partie supérieure mobile de la station de montage (4) sur la station de montage (4), lequel est équipé de dynamomètres, et que plusieurs niveaux fonctionnels horizontaux sont dans l'installation de pulvérisation de lubrifiant (1), dans laquelle
- dans un niveau d'alimentation supérieur (6), des dispositifs de mâchoire de serrage positionnés et triés sur un tronçon d'alimentation, destinés à bloquer des empilements de plaques de batterie (17) peuvent être déplacés avec un entraînement linéaire dans une position centrale dans la station de montage (4),
- dans un niveau de travail supérieur (7), les têtes de pulvérisation (11) sont disposées dans la station de pulvérisation 1 (2) et dans la station de pulvérisation 2 (3),
- dans un niveau de travail central (8), au moins deux armatures d'ajustement-de glissement (5) réalisées en tant qu'armature individuelle ou une armature d'ajustement-de glissement réalisée en tant que double armature avec des ouvertures intérieures respectivement quadrangulaires sont disposées, de manière dirigée linéairement et de manière mobile longitudinalement en effectuant des mouvements de va-et-vient à des cadences coordonnées entre les stations de pulvérisation (2, 3) et la station de montage (4), dans laquelle
- dans un niveau de travail inférieur (9), la matrice d'insertion (16) abaissée repose côté frontal au-dessus du dispositif de mâchoire de serrage sur les empilements de plaques de batterie (17) bloqués par celui-ci et est positionnée par intermittence dans les contenants de batteries (18) vides disposés de manière amenée dans le niveau de travail inférieur (9) à travers l'armature d'ajustement et de glissement (5) disposée dans le niveau de travail central (8) lors de son déplacement d'insertion et de glissement d'abaissement et est disposée, après le conditionnement des empilements de plaques de batteries (17), dans les contenants de batterie (18) de manière repositionnable depuis cette position dans le niveau de travail central.

2. Installation de pulvérisation de lubrifiant (1) selon la revendication 1, **caractérisé en ce que** les têtes de pulvérisation (11) disposées de manière mobile par pivotement et de manière positionnable en stationnaire dans la station de pulvérisation 1 (2) et dans la station de pulvérisation 2 (3) sont disposées et sont reliées par une conduite à un contenant de lubrifiant (12), une pompe de refoulement (13) et un régulateur de débit et de pression de matériau (14) pour le lubrifiant par l'intermédiaire d'une conduite circulaire (15) pour l'amenée et l'évacuation du lubrifiant liquéfié, dans laquelle le contenant de lubrifiant est équipé d'un mécanisme d'agitation pour homogénéiser le lubrifiant fluide fourni, et qu'une dépression permanente est établie dans le boîtier de l'installation de pulvérisation de lubrifiant (1) au moyen de l'évacuation par aspiration (19).

3. Installation de pulvérisation de lubrifiant (1) selon les revendications 1 et 2, **caractérisée en ce qu'**une armature d'ajustement et de glissement (5) pouvant être déplacée de manière dirigée en alternance horizontalement entre la station de pulvérisation 1 (2) et la station de montage (4) et entre la station de pulvérisation 2 (3) et la station de montage (4) est réalisée en tant que double armature avec au moins deux ouvertures intérieures quadrangulaires disposées de manière adjacente de manière adaptée au type du dimensionnement de l'empilement de plaques de batterie (17) totalement inséré et glissé.

4. Installation de pulvérisation de lubrifiant (1) selon l'une quelconque des revendications 1 à 3, **caractérisée en ce que** la ou les matrices d'insertion (16) sont équipées de dynamomètres.

5. Installation de pulvérisation de lubrifiant (1) selon l'une quelconque des revendications 1 à 4, **caractérisée en ce qu'**au moins un bras de pivotement pouvant être rentré par pivotement dans les stations de pulvérisation (2, 3) avec une tête de pulvérisation (11) disposée côté frontal est disposé à l'extérieur des stations de pulvérisation (2, 3).

6. Procédé de traitement de surfaces intérieures sur une armature d'ajustement et de glissement (5), qui fait office d'auxiliaire à l'introduction et au montage pour des empilements de plaques de batterie (17) dans des contenants de batteries (18) adaptables, avec une installation de pulvérisation de lubrifiant (1) selon l'une quelconque des revendications 1 à 5, **caractérisé en ce que** sont réalisés
- une pulvérisation de lubrifiant (20) sur les surfaces intérieures d'une armature d'ajustement et de glissement (5) dans les stations de pulvérisation 1 et 2 (2, 3) ;
- un déplacement alternatif de station horizontal (21) de l'armature d'ajustement et de glissement (5) depuis une des stations de pulvérisation 1 et 2 (2, 3) vers la station de montage (4) en va-et-vient ;
- un déplacement d'insertion et de glissement d'abaissement de respectivement un empilement de plaques de batterie (17) à travers l'armature d'ajustement et de glissement (5), puis
- une introduction et un montage (23) d'abaissement et de glissement dudit empilement de plaques de batterie (17) dans respectivement un contenant de batteries (14) positionné de manière adaptable et sans interruption dans le temps en se suivant directement de manière coordonnée en tant qu'étapes de procédé ;
- les déplacements d'amenée et de sortie (24) d'empilements de plaques de batterie (17) et de contenants de batterie (18) en direction de la station de montage (4) et de manière à s'en éloigner, et
- des commandes de déroulement de procédé (25) et des modifications de procédé relevées par des capteurs selon un déroulement automatisé, dans lequel pendant la totalité du déroulement du procédé, la zone d'air ambiant de la pulvérisation de lubrifiant (20) est maintenue côté pression de l'air dans la plage de dépression au moyen d'une évacuation par aspiration (19) de l'air servant à la sécurité du procédé.

7. Procédé selon la revendication 6, **caractérisé en ce qu'**un mélange de matières composé de polytétrafluoroéthylène et d'isopropanol est homogénéisé en tant que lubrifiant et est utilisé dans l'état liquide, dans lequel le polytétrafluoroéthylène est amené aux têtes de pulvérisation (11) de manière à pouvoir s'écouler grâce à l'isopropanol ajouté et sans pression d'un contenant de lubrifiant (12) avec mécanisme d'agitation en passant par une conduite annulaire de lubrifiant (15) et est appliqué tout en adhérant aux surfaces intérieures des armatures d'ajustement et de glissement (5) en tant que brouillard de pulvérisation par l'intermédiaire des têtes de pulvérisation (11).

8. Procédé selon les revendications 6 et 7, **caractérisé en ce que** la commande du déroulement de procédé relevée par des capteurs est mise en oeuvre côté information et de manière à réguler le procédé pour relever l'emploi nécessaire de lubrifiant et ainsi pour le déplacement alternatif de station (21) horizontal des armatures d'ajustement et de glissement (5) au moyen de dynamomètres disposés sur la matrice d'insertion (16) et servant à mesurer et à surveiller une pression d'insertion prédéfinie.

9. Procédé selon les revendications 6 et 7, **caractérisé en ce que** la commande du déroulement de procédé relevée par des capteurs est mise en oeuvre tout en régulant le procédé pour relever l'emploi de lubrifiant nécessaire et ainsi pour le déplacement alternatif de station horizontal (21) des armatures d'ajustement et de glissement (5) au moyen d'un intervalle prédéfini.
